# EUROPEAN PATENT SPECIFICATION

(11) **EP 1 655 926 B1**
(45) Date of publication and mention of the grant of the patent: **07.03.2007**
(21) Application number: 04256834.5
(22) Date of filing: 04.11.2004
(51) Int. Cl.: H04Q 7/32, H04L 12/56, H04L 12/28, H04Q 7/22, H04L 29/06

(54) **System and method for over the air provisioning of a mobile communications device**
System und Verfahren zur drahtlosen Einrichtung eines mobilen Kommunikationsgeräts
Système et méthode pour la configuration sans-fil d'un appareil de communication mobile

(43) Date of publication of application: 10.05.2006
(73) Proprietor: Research In Motion Limited, Waterloo, Ontario N2L 3W8 (CA)
(72) Inventor: Munje, Arun, Kanata, Ontario K2W 1E3 (CA); Smith, Christopher, Burlington, Ontario L7R 2P3 (CA)
(74) Representative: Roberts, Gwilym Vaughan

(56) References cited:
- US-A1- 2002 029 269
- US-A1- 2002 123 335
- US-A1- 2003 028 649
- US-A1- 2004 054 719

## Description

### TECHNICAL FIELD OF THE APPLICATION

The present application relates, in general, to wireless packet data service networks and, in particular, to a system and method for over the air provisioning of a mobile communications device operable to be disposed in the wireless packet data service network.

### BACKGROUND

It is becoming commonplace to use wireless packet data service networks for effectuating data sessions with mobile communications devices. For example, mobile communications devices may be wirelessly synchronized with a desktop computer such that information is transferred therebetween to update each. Likewise, many mobile communications devices are capable of sending and receiving SMS messages and e-mails as well as conducting WAP sessions. With many of these services, it has been found that the mobile communications device must be configured by the user in order for the user to take full advantage of the capabilities of the mobile communications device. It would be desirable for this configuration process to be as seamless as possible for the user. Accordingly, a need has arisen for system and method for over the air provisioning of the mobile communications device using the wireless packet data service network.

The document US 2003/028649 A1 addresses the problem of so-called "zombie sessions" clear-up, namely ensuring that system resources which might otherwise continue to be consumed when a mobile moves between network end points, become released.

The document US 2003/028649 A1 relates to an apparatus and method for generating an identifier for facilitating delivery of enhanced data services in a wireless computing environment. According to a method presented in the document US 2003/028649 A1 a request to establish a communication session is received at a basestation from a wireless subscriber unit. The request may include a session ID. The session ID may incorporate a wireless device identifier. In the event that the basestation recognizes the session ID, the request is treated as a handoff from another basestation. If a session ID is not recognized, the request is treated as a new communications session. The document US 2003/028649 A1 does not appear to discuss the use of a personal identification number (PIN) or a uniform resource locator (URL) in the method.

The present invention seeks to provide improved mobile communication devices, and methods and systems for use therein.

A first aspect of the invention provides a method for provisioning a mobile communications device in accordance with claim 1.

A second aspect of the invention provides a mobile communications device in accordance with claim 5.

A third aspect of the invention provides a network system for provisioning a mobile communications device in accordance with claim 9.

As disclosed herein, a network system is provided for over the air provisioning of a mobile communications device such that the user of the mobile communications device may take full advantage of the capabilities of the device. The over the air provisioning may take place over a wireless packet data service network comprising one of a General Packet Radio Service (GPRS) network, an Enhanced Data Rates for Global System for Mobile Communications (GSM) Evolution (EDGE) network, a 3rd Generation (3G) network, an Integrated Digital Enhanced Network (IDEN), a Code Division Multiple Access (CDMA) network, a Universal Mobile Telecommunications System (UMTS) network or the like.

The network system includes a first network node, which may be a relay network having a registration server, that is operable to receive a request transmitted by the mobile communications device. This request includes a personal information number and at least one device identifier associated with the mobile communications device such as its IMEI, IMSI, ESN, MIN, ICCID, IP address or the like. Thereafter, the first network node provides a response to the mobile communications device. The response includes a URL and a session ID which may be appended to the URL. The session ID is based upon the personal information number and the at least one device identifier associated with the mobile communications device such as by hashing the personal information number and the at least one device identifier associated with the mobile communications device.

The network system also includes a second network node, which may be a provisioning system and may be colocated or integrated with the first network node. The second network node is operable to receive a query by the first network node that includes the personal information number and the at least one device identifier associated with the mobile communications device, generate the session ID, associate the session ID with the URL and transmit a reply to the first network node that includes the URL and the session ID. The second network node is also operable to establish a communication session with the mobile communications device upon receiving the URL and the session ID transmitted by the mobile communications device. In this communication session, at least one aspect of the mobile communications device may be provisioned over the air. In one embodiment, the second network node must receive the URL and the session ID within a predetermined time window in order to establish the communication session.

### BRIEF DESCRIPTION OF THE DRAWINGS

For a more complete understanding of the features and advantages of the present method and mobile device, reference is now made to the detailed description along with the accompanying figures in which corresponding numerals in the different figures refer to corresponding parts and in which:

Figure 1 depicts an exemplary network environment including a wireless packet data service network wherein an embodiment of the present method may be practiced;

Figure 2 depicts a block diagram of a mobile communications device according to one embodiment of the present disclosure;

Figure 3 depicts a software architectural view of a mobile communications device according to one embodiment of the present disclosure;

Figure 4 depicts additional details of an exemplary relay network operable with a mobile communications device in accordance with an embodiment of the present disclosure;

Figure 5 depicts a flowchart of an embodiment for establishing a communication session for provisioning a mobile communications device; and

Figure 6 depicts a message flow diagram with respect to establishing a communication session for provisioning a mobile communications device.

### DETAILED DESCRIPTION OF THE DRAWINGS

While various embodiments of a mobile communications device operating within a network system are discussed in detail below, it should be appreciated that the present disclosure provides many applicable inventive concepts which can be embodied in a wide variety of specific contexts. The specific embodiments discussed herein are merely illustrative of specific ways to use the mobile communications device within the network system, and do not delimit the scope of the present disclosure.

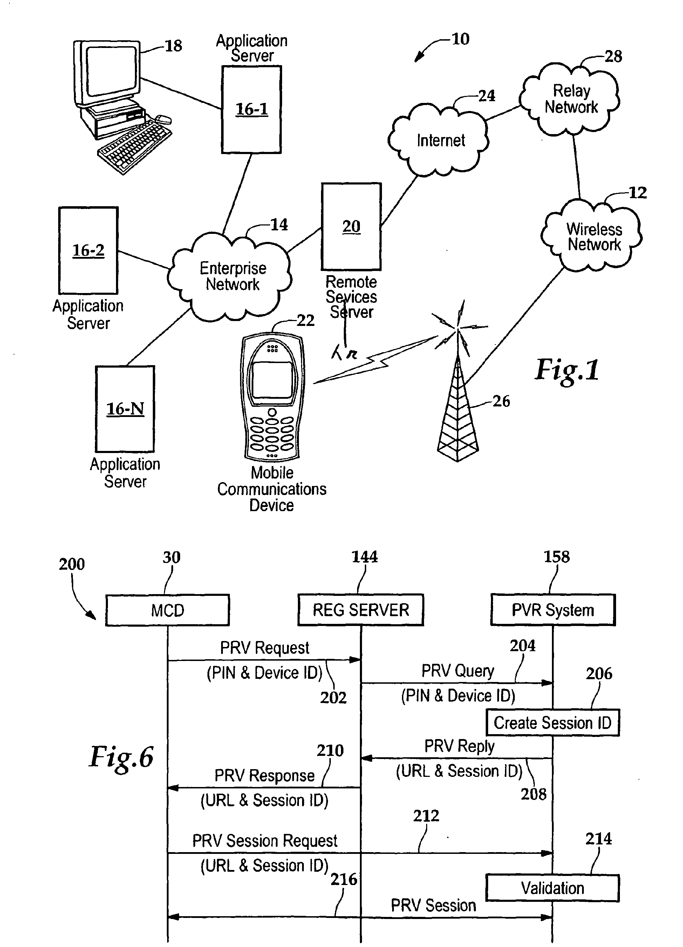

Referring now to the drawings, and more particularly to figure 1, depicted therein is an exemplary network environment 10 including a wireless packet data service network 12 wherein an embodiment of the present method may be practiced. An enterprise network 14 for serving a plurality of corporate users, which may be a packet-switched network, can include one or more geographic sites and be organized as a local area network (LAN), a wide area network (WAN), a metropolitan area network (MAN) or the like. A number of application servers 16-1 through 16-N disposed as part of the enterprise network 14 are operable to provide or effectuate a host of internal and external services such as email, video mail, Internet access, corporate data access, messaging, calendaring and scheduling, information management and the like. Accordingly, a diverse array of personal information appliances 18 such as desktop computers, laptop computers, palmtop computers or the like may be operably networked to one or more of the application servers 16-i, i = 1, 2,...,N, with respect to the services supported in the enterprise network 14.

Additionally, a remote services server 20 may be interfaced with the enterprise network 14 for enabling a corporate user to access or effectuate any of the services from a remote location using a suitable mobile communications device (MCD) 22. A secure communication link with end-to-end encryption may be established that is mediated through an external IP network, i.e., a public packet-switched network such as the Internet 24, as well as the wireless packet data service network 12 operable with MCD 22 via suitable wireless network infrastructure that includes a base station 26. In one embodiment, a trusted relay network 28 may be disposed between the Internet 24 and the infrastructure of wireless packet data service network 12. By way of example, MCD 22 may be a data-enabled handheld device capable of receiving and sending messages, web browsing, interfacing with corporate application servers and the like.

For purposes of the present disclosure, the wireless packet data service network 12 may be implemented in any known or heretofore unknown mobile communications technologies and network protocols, as long as a packet-switched data service is available therein for transmitting packetized information. For instance, the wireless packet data service network 12 may be comprised of a General Packet Radio Service (GPRS) network that provides a packet radio access for mobile devices using the cellular infrastructure of a Global System for Mobile Communications (GSM)-based carrier network. In other implementations, the wireless packet data service network 12 may comprise an Enhanced Data Rates for GSM Evolution (EDGE) network, an Integrated Digital Enhanced Network (IDEN), a Code Division Multiple Access (CDMA) network, a Universal Mobile Telecommunications System (UMTS) network, or any 3rd Generation (3G) network. As will be seen hereinbelow, the embodiments of the present disclosure for provisioning MCD 22 will be described regardless of any particular wireless network implementation.

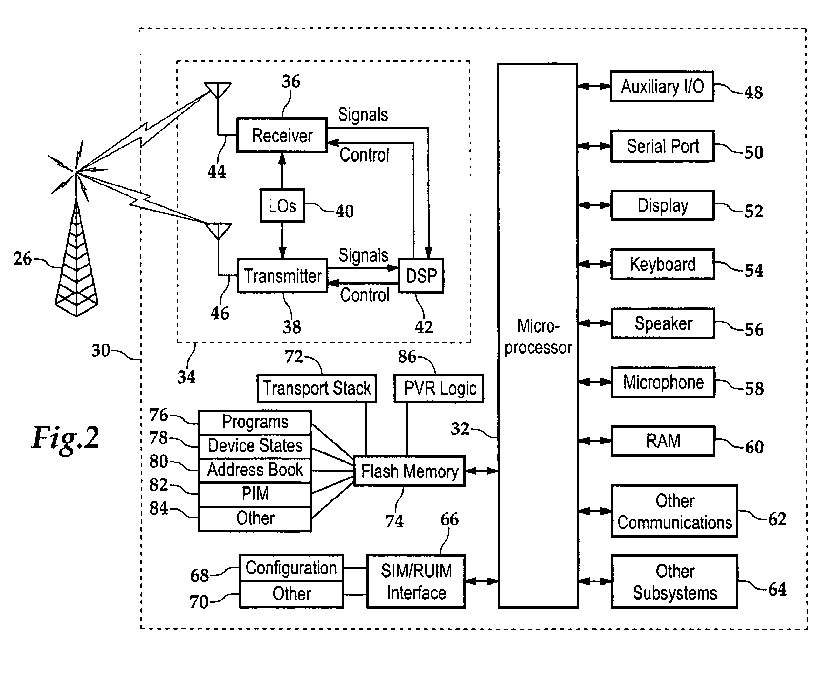

Figure 2 depicts a block diagram of a mobile communications device that is generally designated 30. It will be recognized by those skilled in the art upon reference hereto that although an embodiment of MCD 30 may comprise an arrangement similar to one shown in figure 2, there can be any number of variations and modifications, in hardware, software or firmware, with respect to the various modules depicted. Accordingly, the arrangement of figure 2 should be taken as illustrative rather than limiting with respect to the embodiments of the present disclosure. A microprocessor 32 providing for the overall control of MCD 30 is operably coupled to a communication subsystem 34 which includes a receiver 36 and transmitter 38 as well as associated components such as one or more local oscillator (LO) modules 40 and a processing module such as a digital signal processor (DSP) 42. As will be apparent to those skilled in the field of communications, the particular design of the communication module 34 may be dependent upon the communications network with which the mobile device is intended to operate.

In one embodiment, the communication module 34 is operable with both voice and data communications. Regardless of the particular design, however, signals received by antenna 44 through base station 26 are provided to receiver 36, which may perform such common receiver functions as signal amplification, frequency down conversion, filtering, channel selection, analog-to-digital (A/D) conversion, and the like. Similarly, signals to be transmitted are processed, including modulation and encoding, for example, by DSP 42, and provided to transmitter 44 for digital-to-analog (D/A) conversion, frequency up conversion, filtering, amplification and transmission over the air-radio interface via antenna 46.

Microprocessor 32 also interfaces with further device subsystems such as auxiliary input/output (I/O) 48, serial port 50, display 52, keyboard 54, speaker 56, microphone 58, random access memory (RAM) 60, a short-range communications subsystem 62 and any other device subsystems generally labeled as reference numeral 64. To control access, a Subscriber Identity Module (SIM) or Removable user Identity Module (RUIM) interface 66 is also provided in communication with the microprocessor 32. In one implementation, SIM/RUIM interface 66 is operable with a SIM/RUIM card having a number of key configurations 68 and other information 70 such as identification and subscriber-related data including, for example, an Integrated Circuit Card ID (ICCID).

Operating system software and software associated with transport stack 72 may be embodied in a persistent storage module (i.e., non-volatile storage) such as Flash memory 74. In one implementation, Flash memory 74 may be segregated into different areas, e.g., storage areas for computer programs 76, device states 78, address book 80, other personal information manager (PIM) data 82 and other data storage areas generally labeled as reference numeral 84. Additionally, a provisioning (PRV) logic module 86 is provided for provisioning certain aspects of MCD 30 according to the teachings set forth herein.

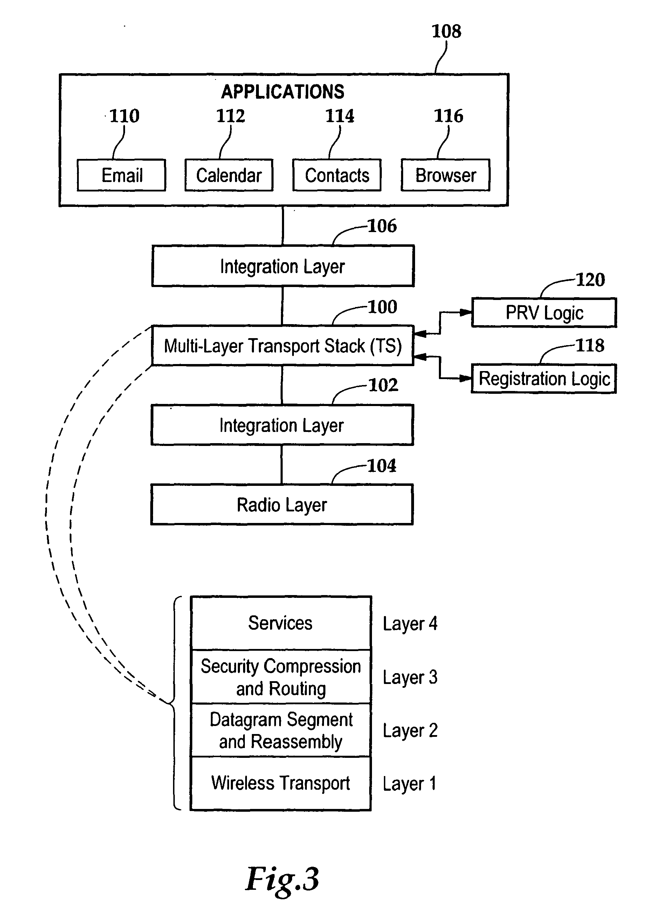

Figure 3 depicts a software architectural view of a mobile communications device operable according to one embodiment for provisioning certain aspects of the MCD regardless of the manufacturer of the MCD or the wireless service provider. A multi-layer transport stack (TS) 100 is operable to provide a generic data transport protocol for any type of corporate data, including email, via a reliable, secure and seamless continuous connection to a wireless packet data service network. As illustrated in the embodiment of figure 3, an integration layer 102 is operable as an interface between the MCD's radio layer 104 and the transport stack 100. Likewise, another integration layer 106 is provided for interfacing between the transport stack 100 and the user applications 108 supported on the MCD, e.g., email 110, calendar/scheduler 112, contact management 114 and web browser 116. Although not specifically shown, the transport stack 100 may also be interfaced with the MCD's operating system. In another implementation, the transport stack 100 may be provided as part of a data communications client module operable as a host-independent virtual machine on a mobile device.

The bottom layer (Layer 1) of the transport stack 100 is operable as an interface to the wireless network's packet layer. Layer 1 handles basic service coordination within the exemplary network environment 10 shown in figure 1. For example, when an MCD roams from one carrier network to another, Layer 1 verifies that the packets are relayed to the appropriate wireless network and that any packets that are pending from the previous network are rerouted to the current network. The top layer (Layer 4) exposes various application interfaces to the services supported on the MCD. The remaining two layers, Layer 2 and Layer 3, are responsible for datagram segmentation/reassembly and security, compression and routing, respectively.

Figure 3 also depicts a registration logic module 118 provided as part of the MCD's software environment that is disposed in operable communication with the transport stack 100 as well as the OS environment for effectuating registration procedures, as and when needed, with the serving relay network. In one implementation, where a PIN is not otherwise provided or associated with the MCD, the registration logic module 118 includes logic means operable to execute a registration procedure with the serving relay node to request and receive a PIN, which will allow identification of the MCD by this network node during future communication sessions therebetween.

A PRV logic module 120 provided as part of the MCD's software environment is disposed in operable communication with the transport stack 100 as well as the OS environment. In one embodiment, the PRV logic module 120 comprises logic operable to generate a request including the PIN and at least one hardware device identifier associated with the MCD for transmission in a message to a network node such as the above mentioned serving relay node with an associated registration server, provisioning server and the like. As stated above, the PIN may be a required parameter in communications between an MCD and the serving relay node for identification and verification purposes. As one of ordinary skill in the art should appreciate, the hardware device identifier may comprise International Mobile station Equipment Identity (IMEI) parameters, International Mobile Subscriber Identity (IMSI) parameters, Electronic Serial Number (ESN) parameters, Mobile Identification Number (MIN) parameters, or the like, that are hard-coded into MCDs depending on the wireless network technologies and protocols. Additionally, the ICCID or IP addresses corresponding to the MCDs may also operate as device identifiers. The PRV logic module 120 may then receive from the network node a URL having a session ID appended thereto or otherwise associated therewith that may be based upon such techniques as hashing of the PIN, the hardware device identifier or both. Preferably, the session ID is sent in a secure communication using, for example, cryptography to protect the integrity of the session ID. Also, the session ID may include a timestamp used to indicate the duration in which the session ID will be valid. This URL and session ID is then available to browser 116 such that a communication session can be established between the MCD and an appropriate provisioning server such that certain aspects of the MCD may be provisioned.

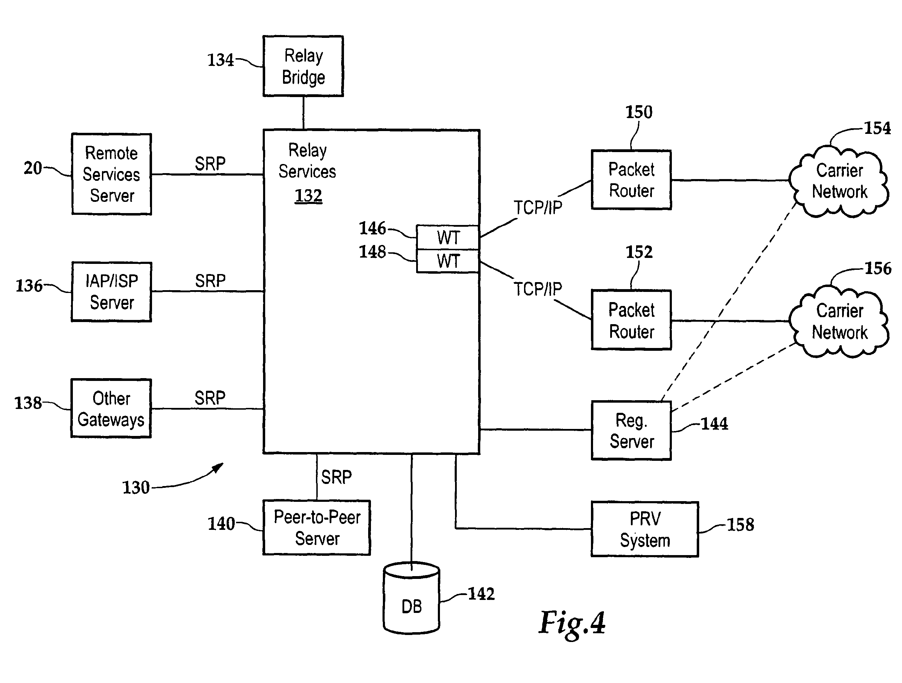

Figure 4 depicts additional details of an exemplary relay network infrastructure 130 operable as part of relay network 28 interfacing with the wireless packet data service network 12 described above. A relay services node 132 is operable, at least in part, for providing connectivity between MCDs and various data application services such as enterprise services, external IP data services and the like, regardless of the geographic location of the MCDs and their respective wireless carriers. Also, since multiple relay services nodes can co-exist in a distributed network architecture, a relay bridge 134 may be provided in operable connection with the relay services node 132 for supporting inter-relay connectivity. In one implementation, relay bridge 134 connects with separate relay node sites, forming tunnels between relays over which MCD messages can flow to and from services, irrespective of the region where the MCD is in.

Communication between the relay services node 132 and various application gateways and servers is effectuated using any suitable protocol, e.g., Server Relay Protocol (SRP), preferably over IP links. By way of illustration, remote services server 20 associated with the enterprise network 14 (shown in figure 1) communicates with the relay using SRP for effectuating internal data services with respect to the enterprise's mobile subscribers. Likewise, reference numerals 136 and 138 refer to external application gateways, such as Internet Service Provider (ISP) or Internet Access Provider (IAP) servers, and other gateways, respectively, which are also interfaced with the relay node 132 using SRP. A peer-to-peer server 140 may also be provided in operable connection with the relay node 132 for handling peer-level messaging between two MCDs.

Additionally, a database 142 may be provided in operable connection with the relay node 132 for handling and managing MCD location information. Preferably, this location information is stored by PIN of the MCDs, wherein the records maintain a particular device's last known location. A registration server 144 is operable for providing registration services for MCDs when they are initially activated or when the user re-registers due to moving to a different wireless network coverage area. In one implementation, the location information of registration server 144 may be programmed into an MCD. When the MCD registers successfully, registration server 144 is operable to provide the serving relay node's location, whereupon data sessions may be engaged by the MCD.

One or more wireless transport (WT) interfaces are provided as part of relay services node 132 for connecting with wireless carrier networks that service MCDs. By way of illustration, WT 146 and WT 148 communicate with respective packet routers 150 and 152 using TCP/IP links, which route data packets to and from respective wireless packet data service networks, exemplified in figure 4 as carrier network 154 and carrier network 156. Although not specifically shown, registration server 144, which handles administration and registration services for MCDs, may be provided with separate WT and packet routing for interfacing with the carrier networks 154, 156.

A provisioning system (PRV) 158 may be colocated, integrated or otherwise associated with the relay services node 132 for setting up and managing various service providers (i.e., carrier networks), subscribers, MCD manufacturers, resellers and other entities in order to support any number of service and market differentiation requirements. Additionally, the provisioning system 158 may include logic for provisioning personal information and preferences with respect to certain aspects of the MCDs when they are initially activated for the associated services. Also, subscriber validation logic may be provided as part of the provisioning system 158. Accordingly, the provisioning system 158 may be implemented with a plurality of interfaces with respect to the various modules of the relay services node 132, e.g., interfaces to registration servers, peer-to-peer servers, location databases and the like, in addition to including attendant service logic processing that may be realized in suitable hardware, firmware and/or firmware logic blocks as well as database structures.

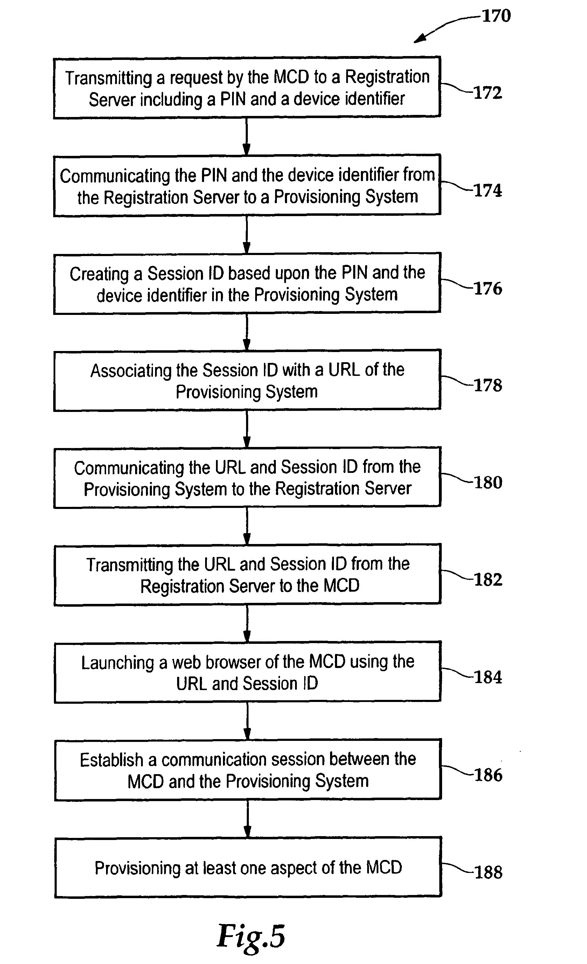

Figure 5 depicts a flowchart of an embodiment for establishing a communication session between a provisioning system and a mobile communications device. In the present embodiment, the communication session is a web client based communication session preferably using Wireless Application Protocol (WAP) or other suitable communication protocol. Prior to full utilization of the MCD, certain aspects of the device's overall functionality may need to be provisioned such as particular parameters to enable information to be pushed to the MCD. The provisioning of these aspects of the MCD may require authentication of the device, via a PIN, a device identifier or both, prior to provisioning. When the MCD is manufactured, one or more device identifiers such as IMEI, IMSI, ESN, MIN or the like are typically associated with the device. A PIN for these desires services, on the other hand, may not be assigned to the device upon manufacturing requiring the user to acquire such a PIN directly from the service provider via an over the air request and response sequence, which may take place with little or no user intervention. Additionally, once the MCD is deployed, it may be provided with an IP address since it is an IP appliance operable with a wireless packet data service network. Once the device has acquired the PIN relating to the aspects of the device the user desires to provision, it is now desirable to make the provisioning process as seamless as possible.

It has been found, however, that many applications including, for example, the web browsers used in MCDs are not capable of retrieving and using PIN and device identifier information. For example, the web browser may not have access to the integration layer of the transport stack. As such, the present disclosure provides for communicating such PIN information to the web browser to allow the web browser to establish a communication session with the appropriate provisioning system.

Specifically, as detailed in method 170 of figure 5, once the MCD has the appropriate PIN, the transport stack of the MCD can access the PIN and device identifier information and transmit a request to the registration server including the PIN and device identifier (block 172). This information is then communicated from the registration server to the provisioning system which may be colocated, integrate or otherwise communicably associated with the registration server (block 174). The provisioning system can then generate a session ID which is preferably based upon the PIN and the device identifier such as by using a hashing technique (block 176). The session ID can now be associated with a URL of the provisioning system such as by appending the session ID to the URL as one or more parameters (block 178). Preferably, the session ID includes a timestamp that establishes a time frame within which the session ID will remain valid. The provisioning system communicates the URL with session ID parameters to the registration server (block 180) which is still in communication with the MCD. The registration server then transmits the URL with session ID parameters to the MCD which receives this information via the transport stack (block 182). Once the MCD has obtained the URL with session ID parameters this information is passed to the web browser. In embodiments wherein only one PDP context is supported, the current PDP context between the MCD and the registration server may now be released. In other embodiment wherein multiple PDP contexts are supported, this release is not be necessary. In either case, the web browser now launches the web page associated with the URL which includes the session ID such that the device information of the MCD is known to the provisioning system (block 184). Once the web browser has launched the web page, the new PDP context is established between the MCD and the provisioning system (block 186). In this communication session, the aspects of the MCD that are associated with this service provider can now be provisioned over the air using well known data entry techniques via the web browser (block 188).

Figure 6 depicts a message flow diagram with respect to establishing a communication session for provisioning a mobile communications device that is generally designated 200. A PRV request message 202 is transmitted by MCD 30 to a network node, e.g., registration server 144, wherein the request message 202 includes a PIN as well as a device identifier as parametric information. Registration server 144 queries suitable service logic, which may be embodied as the provisioning system 158 associated with the relay services network described above, by issuing a PRV query 204 thereto, which includes the parametric information received in the PRV request 202. The provisioning system's PRV logic is operable to validate the request and provide, via a PRV reply 208 to the registration server 144, a message including a URL having session ID parameters appended thereto. This information is then transmitted to MCD 30 via PRV response message 210 from registration server 144. Thereafter, a PRV session request 212 including the URL having session ID parameters may be executed by MCD 30. In response thereto, the PVR system 158 is operable to validate 214 the request to, among other things, assure that the session ID has not expired. Upon successful validation, a PRV session 216 between MCD 30 and PVR system 158 may occur to provision the associated aspects of MCD 30.

While this disclosure has described a mobile communications device operating within a network system with reference to illustrative embodiments, this description is not intended to be construed in a limiting sense. Various modifications and combinations of the illustrative embodiments as well as other embodiments, will be apparent to persons skilled in the art upon reference to the description. It is, therefore, intended that the appended claims encompass any such modifications or embodiments.

## Claims

1. A method for provisioning a mobile communications device (30) comprising:
transmitting a request by the mobile communications device (30) to a first network node (144), the request including a personal information number and at least one device identifier associated with the mobile communications device (30);
receiving a response from the first network node (144) by the mobile communications device (30), the response including a URL and a session ID based upon the personal information number and the at least one device identifier associated with the mobile communications device (30); and
transmitting the URL and the session ID by the mobile communications device (30) to a second network node (158) to establish a communication session therewith to provision at least one aspect of the mobile communications device (30).

2. The method for provisioning a mobile communications device (30) as recited in claim 1 further comprising:
transmitting a query by the first network node (144) to the second network node (158), the query including the personal information number and the at least one device identifier associated with the mobile communications device (30) ;
generating the session ID in the second network node (158);
associating the session ID with a URL of the second network node (158); and
receiving a reply from the second network node (158) by the first network node (144), the reply including the URL and the session ID.

3. The method for provisioning a mobile communications device (30) as recited in claim 1 wherein the session ID is generated based on hashing the personal information number and the at least one device identifier associated with the mobile communications device (30).

4. The method for provisioning a mobile communications device (30) as recited in claim 1 wherein the step of transmitting the URL and the session ID by the mobile communications device (30) to a second network node (158) takes place within a predetermined time window.

5. A mobile communications device (30) comprising:
logic (72) operable to generate a request that is transmitted to a first network node (144), the request including a personal information number and at least one device identifier associated with the mobile communications device (30);
logic (72) operable to receive a response from the first network node (144), the response including a URL and a session ID based upon the personal information number and the at least one device identifier associated with the mobile communications device (30); and
logic (86) operable to establish a communication session with a second network node (158) to provision at least one aspect of the mobile communications device (30) by transmitting the URL and the session ID to the second network node (158).

6. The mobile communications device (30) as recited in claim 5 wherein the at least one device identifier further comprises one of an International Mobile station Equipment Identity IMEI parameter corresponding to the mobile communications device (30), an International Mobile Subscriber Identity IMSI parameter corresponding to the mobile communications device (30), an Electronic Serial Number ESN parameter corresponding to the mobile communications device (30), a Mobile Identification Number MIN parameter corresponding to the mobile communications device (30), an Integrated Circuit Card ICCID parameter corresponding to the mobile communications device (30) and an Internet Protocol IP address corresponding to the mobile communications device (30).

7. The mobile communications device (30) as recited in claim 5 wherein the session ID is generated based on hashing the personal information number and the at least one device identifier associated with the mobile communications device (30).

8. The mobile communications device (30) as recited in claim 5 wherein the logic (860 operable to establish the communication session with a second network node (158) to provision at least one aspect of the mobile communications device (30) transmits the URL and the session ID to the second network node (158) within a predetermined time window.

9. A network system for provisioning a mobile communications device (30) comprising:
a first network node (144) operable to receive a request transmitted by the mobile communications device (30), the request including a personal information number and at least one device identifier associated with the mobile communications device (30) and provide a response to the mobile communications device (30), the response including a URL and a session ID based upon the personal information number and the at least one device identifier associated with the mobile communications device (30); and
a second network node (158) operable to establish a communication session with the mobile communications device (30) to provision at least one aspect of the mobile communications device (30) upon receiving the URL and the session ID transmitted by the mobile communications device (30) .

10. The network system as recited in claim 9 wherein the first network node (144) is operable as part of a relay network.

11. The network system as recited in claim 9 wherein the second network node (158) is operable as part of a provisioning system.

12. The network system as recited in claim 9 wherein the second network node (158) is further operable to receive a query by the first network node (144) that includes the personal information number and the at least one device identifier associated with the mobile communications device (30), generate the session ID, associate the session ID with the URL and transmit a reply to the first network node (144) that includes the URL and the session ID.

13. The network system as recited in claim 9 wherein the session ID is generated based on hashing the personal information number and the at least one device identifier associated with the mobile communications device (30).

14. The network system as recited in claim 9 wherein the first and second network node (158s) are adapted to interface with a wireless packet data service network comprising one of a General Packet Radio Service GPRS network, an Enhanced Data Rates for Global System for Mobile Communications GSM Evolution EDGE network, a 3rd Generation 3G network, an Integrated Digital Enhanced Network IDEN, a Code Division Multiple Access CDMA network and a Universal Mobile Telecommunications System UMTS network.

15. The network system as recited in claim 9 wherein the second network node (158) receives the URL and the session ID within a predetermined time window in order to establish the communication session.

16. The network system as recited in claim 9 wherein the first network node (144) and the second network node (158) are colocated.

17. The network system as recited in claim 9 wherein the first network node (144) and the second network node (158) are integrated.

## Patentansprüche

1. Verfahren zum Einrichten einer mobilen Kommunikationsvorrichtung (30), umfassend:
Übertragen einer Anforderung durch die mobile Kommunikationsvorrichtung (30) an einen ersten Netzwerkknoten (144), wobei die Anforderung eine persönliche Informationsnummer und wenigstens eine Vorrichtungskennung, die mit der mobilen Kommunikationsvorrichtung (30) verbunden sind, umfasst, Empfangen einer Antwort von dem ersten Netzwerkknoten (144) durch die mobile Kommunikationsvorrichtung (30), wobei die Antwort eine URL und eine Sitzungs-ID, die auf der persönlichen Informationsnummer und der wenigstens einen Vorrichtungskennung, welche mit der mobilen Kommunikationsvorrichtung (30) verbunden sind, basieren, umfasst, und
Übertragen der URL und der Sitzungs-ID durch die mobile Kommunikationsvorrichtung (30) an einen zweiten Netzwerkknoten (158), um eine Kommunikationssitzung aufzubauen, damit wenigstens einen Aspekt der mobilen Kommunikationsvorrichtung (30) bereitzustellen.

2. Verfahren zum Einrichten einer mobilen Kommunikationsvorrichtung (30) nach Anspruch 1, weiterhin umfassend:
Übertragen einer Anfrage durch den ersten Netzwerkknoten (144) an den zweiten Netzwerkknoten (158), wobei die Anfrage die persönliche Informationsnummer und die wenigstens eine Vorrichtungskennung, die mit der mobilen Kommunikationsvorrichtung (30) verbunden sind, umfasst,
Erzeugen der Sitzungs-ID in dem zweiten Netzwerkknoten (158),
Zuordnen der Sitzungs-ID zu einer URL des zweiten Netzwerkknotens (158), und
Empfangen einer Antwort von dem zweiten Netzwerkknoten (158) durch den ersten Netzwerkknoten (144), wobei die Antwort die URL und die Sitzungs-ID umfasst.

3. Verfahren zum Einrichten einer mobilen Kommunikationsvorrichtung (30) nach Anspruch 1, wobei die Sitzungs-ID basierend auf einem Falten der persönlichen Informationsnummer und der wenigstens einen Vorrichtungskennung, welche mit der mobilen Kommunikationsvorrichtung (30) verbunden sind, erzeugt wird.

4. Verfahren zum Einrichten einer mobilen Kommunikationsvorrichtung (30) nach Anspruch 1, wobei der Schritt zum Übertragen der URL und der Sitzungs-ID durch die mobile Kommunikationsvorrichtung (30) an einen zweiten Netzwerkknoten (158) in einem vorbestimmten Zeitfenster durchgeführt wird.

5. Mobile Kommunikationsvorrichtung (30), umfassend:
Eine Logikschaltung (72), die betreibbar ist, um eine Anforderung, welche an einen ersten Netzwerkknoten (144) übertragen wird, zu erzeugen, wobei die Anforderung eine persönliche Informationsnummer und wenigstens eine Vorrichtungskennung, die mit der mobilen Kommunikationsvorrichtung (30) verbunden sind, umfasst,
eine Logikschaltung (72), die betreibbar ist, eine Antwort von dem ersten Netzwerkknoten (144) zu empfangen, wobei die Antwort eine URL und eine Sitzungs-ID, die auf der persönlichen Informationsnummer und der wenigstens einen Vorrichtungskennung, welche mit der mobilen Kommunikationsvorrichtung (30) verbunden sind, basieren, umfasst, und
eine Logikschaltung (86), die betreibbar ist, um eine Kommunikationssitzung mit einem zweiten Netzwerkknoten (158) durch Übertragen der URL und der Sitzungs-ID an den zweiten Netzwerkknoten (158) aufzubauen, damit wenigstens einen Aspekt der mobilen Kommunikationsvorrichtung (30) bereitzustellen.

6. Mobile Kommunikationsvorrichtung (30) nach Anspruch 5, wobei die wenigstens eine Vorrichtungskennung weiterhin einen von einem International Mobile station Equipment Identity IMEI-Parameter entsprechend der mobilen Kommunikationsvorrichtung (30), einem International Mobile Subscriber Identity IMSI-Parameter entsprechend der mobilen Kommunikationsvorrichtung (30), einem Electronic Serial Number ESN-Parameter entsprechend der mobilen Kommunikationsvorrichtung (30), einem Mobile Identification Number MIN-Parameter entsprechend der mobilen Kommunikationsvorrichtung (30), einem Integrated Circuit Card ICCID-Parameter entsprechend der mobilen Kommunikationsvorrichtung (30) und einer Internet-Protokoll IP Adresse entsprechend der mobilen Kommunikationsvorrichtung (30) umfasst.

7. Mobile Kommunikationsvorrichtung (30) nach Anspruch 5, wobei die Sitzungs-ID basierend auf einem Falten der persönlichen Informationsnummer und der wenigstens einen Vorrichtungskennung, welche mit der mobilen Kommunikationsvorrichtung (30) verbunden sind, erzeugbar ist.

8. Mobile Kommunikationsvorrichtung (30) nach Anspruch 5, wobei die Logikschaltung (86), die betreibbar ist, um eine Kommunikationssitzung mit einem zweiten Netzwerkknoten (158) aufzubauen, damit wenigstens einen Aspekt der mobilen Kommunikationsvorrichtung (30) bereitzustellen, die URL und die Sitzungs-ID an den zweiten Netzwerkknoten (158) in einem vorbestimmten Zeitfenster zu übertragen.

9. Mobiles Netzwerksystem zum Einrichten einer mobilen Kommunikationsvorrichtung (30), umfassend:
Einen ersten Netzwerkknoten (144), der betreibbar ist, um eine Anforderung, welche durch die mobile Kommunikationsvorrichtung (30) übertragen wird, zu empfangen, wobei die Anforderung eine persönliche Informationsnummer und wenigstens eine Vorrichtungskennung, die mit der mobilen Kommunikationsvorrichtung (30) verbunden sind, umfasst, und um eine Antwort an die mobile Kommunikationsvorrichtung (30) vorzusehen, wobei die Antwort eine URL und eine Sitzungs-ID, die auf der persönlichen Informationsnummer und der wenigstens einen Vorrichtungskennung, welche mit der mobilen Kommunikationsvorrichtung (30) verbunden sind, basieren, und
einen zweiten Netzwerkknoten (158), der betreibbar ist, um eine Kommunikationssitzung mit der mobilen Kommunikationsvorrichtung (30) zum Einrichten wenigstens eines Aspektes der mobilen Kommunikationsvorrichtung (30) nach Empfangen der URL und der Sitzungs-ID, welche von der mobilen Kommunikationsvorrichtung (30) übertragen sind, aufzubauen.

10. Mobiles Netzwerksystem nach Anspruch 9, wobei der erste Netzwerkknoten (144) als Teil eines Relaynetzwerkes betreibbar ist.

11. Mobiles Netzwerksystem nach Anspruch 9, wobei der zweite Netzwerkknoten (158) als Teil eines Einrichtungssystems betreibbar ist.

12. Mobiles Netzwerksystem nach Anspruch 9, wobei der zweite Netzwerkknoten (158) weiterhin betreibbar ist, eine Anfrage, welche die persönliche Informationsnummer und die wenigstens eine Vorrichtungskennung, die mit der mobilen Kommunikationsvorrichtung (30) verbunden sind, umfasst, durch den ersten Netzwerkknoten (144) zu empfangen, die Sitzungs-ID zu erzeugen, die Sitzungs-ID der URL zuzuordnen und eine Antwort, welche die URL und die Sitzungs-ID umfasst, an den ersten Netzwerkknoten (144) zu übertragen.

13. Mobiles Netzwerksystem nach Anspruch 9, wobei die Sitzungs-ID auf basierend auf einem Falten der persönlichen Informationsnummer und der wenigstens einen Vorrichtungskennung, welche mit der mobilen Kommunikationsvorrichtung (30) verbunden sind, erzeugt ist.

14. Mobiles Netzwerksystem nach Anspruch 9, wobei der erste und der zweite Netzwerkknoten (158) angepasst sind, mit einem drahtlosen Paketdatendienstnetzwerk, das ein von einem General Packet Radio Service GPRS-Netzwerk, einem Enhanced Data Rates for Global System for Mobile Communications GSM Evolution EDGE-Netzwerk, einem 3. Generation 3G-Netzwerk, einem Integrated Digital Enhanced IDEN-Netzwork, einem Code Division Multiple Access CDMA-Netzwerk und einem Universal Mobile Telecommunications System UMTS-Netzwerk umfasst, eine Schnittstelle zu bilden.

15. Mobiles Netzwerksystem nach Anspruch 9, wobei der zweite Netzwerkknoten (158) die URL und die Sitzungs-ID in einem vorbestimmten Zeitfenster empfängt, um eine Kommunikationssitzung aufzubauen.

16. Mobiles Netzwerksystem nach Anspruch 9, der erste Netzwerkknoten (144) und der zweite Netzwerkknoten (158) ortsgleich sind.

17. Mobiles Netzwerksystem nach Anspruch 9, der erste Netzwerkknoten (144) und der zweite Netzwerkknoten (158) integriert sind.

## Revendications

1. Procédé destiné à approvisionner un dispositif de communications mobile (30) comprenant :
la transmission d'une demande par le dispositif de communications mobile (30) à un premier noeud de réseau (144), la demande comprenant un numéro d'information personnelle et au moins un identifiant de dispositif associé au dispositif de communications mobile (30) ;
la réception d'une réponse depuis le premier noeud de réseau (144) par le dispositif de communications mobile (30), la réponse comprenant une URL et un ID de session basé sur le numéro d'information personnelle et le au moins un identifiant de dispositif associé au dispositif de communications mobile (30) ; et
la transmission de l'URL et de l'ID de session par le dispositif de communications mobile (30) à un second noeud de réseau (158) pour établir par ce moyen une session de communication pour approvisionner au moins un aspect du dispositif de communications mobile (30).

2. Procédé destiné à approvisionner un dispositif de communications mobile (30) selon la revendication 1, comprenant de plus :
la transmission d'une question par le premier noeud de réseau (144) au second noeud de réseau (158), la question comprenant le numéro d'information personnelle et le au moins un identifiant de dispositif associé au dispositif de communications mobile (30) ;
la génération de l'ID de session dans le second noeud de réseau (158) ;
l'association de l'ID de session à une URL du second noeud de réseau (158) ; et
la réception d'une réponse depuis le second noeud réseau (158) par le premier noeud de réseau (144), la réponse comprenant l'URL et l'ID de session.

3. Procédé destiné à approvisionner un dispositif de communications mobile (30) selon la revendication 1, dans lequel l'ID de session est généré sur la base du hachage du numéro d'information personnelle et du au moins un identifiant de dispositif associé au dispositif de communications mobile (30).

4. Procédé destiné à approvisionner un dispositif de communications mobile (30) selon la revendication 1, dans lequel l'étape consistant à transmettre l'URL et l'ID de session par le dispositif de communications mobile (30) à un second noeud de réseau (158) a lieu dans une fenêtre temporelle prédéterminée.

5. Dispositif de communications mobile (30) comprenant :
une logique (72) utilisable pour générer une demande qui est transmise à un premier noeud de réseau (144), la demande comprenant un numéro d'information personnelle et au moins un identifiant de dispositif associé au dispositif de communications mobile (30) ;
une logique (72) utilisable pour recevoir une réponse depuis le premier noeud de réseau (144), la réponse comprenant une URL et un ID de session basé sur le numéro d'information personnelle et le au moins un identifiant de dispositif associé au dispositif de communications mobile (30) ; et
une logique (86) utilisable pour établir une session de communication avec un second noeud de réseau (158) pour approvisionner au moins un aspect du dispositif de communications mobile (30) en transmettant l'URL et l'ID de session au second noeud de réseau (158).

6. Dispositif de communications mobile (30) selon la revendication 5, dans lequel le au moins un identifiant de dispositif comprend de plus l'un parmi un paramètre IMEI (International Mobile station Equipment Identity - identité internationale d'équipement de station mobile) correspondant au dispositif de communications mobile (30), un paramètre IMSI (International Mobile Subscriber Identity - identité internationale d'abonné mobile) correspondant au dispositif de communications mobile (30), un paramètre ESN (Electronic Serial Number - numéro de série électronique) correspondant au dispositif de communications mobile (30), un paramètre MIN (Mobile Identification Number - numéro d'identification mobile) correspondant au dispositif de communications mobile (30), un paramètre ICCID (Integrated Circuit Card - carte de circuit intégré) correspondant au dispositif de communications mobile (30) et une adresse IP (Internet Protocol - protocole Internet) correspondant au dispositif de communications mobile (30).

7. Dispositif de communications mobile (30) selon la revendication 5, dans lequel l'ID de session est généré sur la base du hachage du numéro d'information personnelle et du au moins un identifiant de dispositif associé au dispositif de communications mobile (30).

8. Dispositif de communications mobile (30) selon la revendication 5, dans lequel la logique (860) utilisable pour établir la session de communication avec un second noeud de réseau (158) pour approvisionner au moins un aspect du dispositif de communications mobile (30) transmet l'URL et l'ID de session au second noeud de réseau (158) dans une fenêtre temporelle prédéterminée.

9. Système réseau destiné à approvisionner un dispositif de communications mobile (30) comprenant :
un premier noeud de réseau (144) utilisable pour recevoir une demande transmise par le dispositif de communications mobile (30), la demande comprenant un numéro d'information personnelle et au moins un identifiant de dispositif associé au dispositif de communications mobile (30) et fournir une réponse au dispositif de communications mobile (30), la réponse comprenant une URL et un ID de session basé sur le numéro d'information personnelle et le au moins un identifiant de dispositif associé au dispositif de communications mobile (30) ; et
un second noeud de réseau (158) utilisable pour établir une session de communication avec le dispositif de communications mobile (30) pour approvisionner au moins un aspect du dispositif de communications mobile (30) lors de la réception de l'URL et de l'ID de session transmis par le dispositif de communications mobile (30).

10. Système réseau selon la revendication 9, dans lequel le premier noeud de réseau (144) est utilisable en tant que partie d'un réseau relai.

11. Système réseau selon la revendication 9, dans lequel le second noeud de réseau (158) est utilisable en tant que partie d'un système d'approvisionnement.

12. Système réseau selon la revendication 9, dans lequel le second noeud de réseau (158) est de plus utilisable pour recevoir une question posée par le premier noeud de réseau (144), question qui comprend le numéro d'information personnelle et le au moins un identifiant de dispositif associé au dispositif de communications mobile (30), générer l'ID de session, associer l'ID de session à l'URL et transmettre une réponse au premier noeud de réseau (144), qui comprend l'URL et l'ID de session.

13. Système réseau selon la revendication 9, dans lequel l'ID de session est généré sur la base du hachage du numéro d'information personnelle et du au moins un identifiant de dispositif associé au dispositif de communications mobile (30).

14. Système réseau selon la revendication 9, dans lequel le premier et le second noeud de réseau (158s) sont adaptés pour s'interfacer avec un réseau de service de données en mode paquet sans fil comprenant l'un parmi un réseau GPRS (General Packet Radio Service - service général de radiocommunications en mode paquet), un réseau EDGE (Enhanced Data Rates for Global System for Mobile Communications GSM Evolution - évolution à vitesses de données améliorées pour système global pour communications mobiles GSM (Global System for Mobile Communications - système global pour communications mobiles)), un réseau 3G (3rd Generation - 3^{ème} génération), un IDEN (Integrated Digital Enhanced Network - réseau amélioré numérique intégré), un réseau CDMA (Code Division Multiple Access - accès multiple par division de code) et un réseau UMTS (Universal Mobile Telecommunications System - système de télécommunications mobiles universel).

15. Système réseau selon la revendication 9, dans lequel le second noeud de réseau (158) reçoit l'URL et l'ID de session dans une fenêtre temporelle prédéterminée de manière à établir la session de communication.

16. Système réseau selon la revendication 9, dans lequel le premier noeud de réseau (144) et le second noeud de réseau (158) sont regroupés.

17. Système réseau selon la revendication 9, dans lequel le premier noeud de réseau (144) et le second noeud de réseau (158) sont intégrés.
